(19) Europäisches Patentamt
European Patent Office
Office européen des brevets

(11) Veröffentlichungsnummer : **0 157 291**
**B1**

# (12) EUROPÄISCHE PATENTSCHRIFT

(45) Veröffentlichungstag der Patentschrift : **19.07.89**

(51) Int. Cl.$^4$ : **C 08 J 3/02**, C 25 D 13/06

(21) Anmeldenummer : **85103218.5**

(22) Anmeldetag : **20.03.85**

## (54) Wässrige Dispersionen auf Polyesterbasis, ihre Herstellung und ihre Verwendung zur Herstellung von Einbrennlacken.

(30) Priorität : **04.04.84 DE 3412611**

(43) Veröffentlichungstag der Anmeldung : **09.10.85 Patentblatt 85/41**

(45) Bekanntmachung des Hinweises auf die Patenterteilung : **19.07.89 Patentblatt 89/29**

(84) Benannte Vertragsstaaten : **AT BE CH DE FR GB IT LI NL SE**

(56) Entgegenhaltungen :
**EP-A- 0 002 488**
**EP-A- 0 017 199**
**EP-A- 0 022 518**
**FR-A- 2 366 319**
**US-A- 4 116 902**
**US-A- 4 329 490**

(73) Patentinhaber : **BAYER AG**
**D-5090 Leverkusen 1 Bayerwerk (DE)**

(72) Erfinder : **Nachtkamp, Klaus, Dr.**
**Leuchterstrasse 112**
**D-5000 Koeln 80 (DE)**
Erfinder : **Meixner, Jürgen, Dr.**
**Bethelstrasse 18**
**D-4150 Krefeld (DE)**
Erfinder : **Sickert, Armin, Ing.grad.**
**Schreberstrasse 9**
**D-4150 Krefeld (DE)**
Erfinder : **Stahl, Hans-Georg, Dr.**
**Theodor Wobnitz Strasse 22**
**D-2900 Oldenburg (DE)**

**EP 0 157 291 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Dispersionen auf Polyester- bzw. Alkydharzbasis, deren Harzkomponente mit wasserlöslichen Aminoplastharzen gehärtet werden können, ihre Herstellung und ihre Verwendung zur Herstellung von Einbrennlacken.

Unter « wäßrigen Dispersionen » werden im folgenden heterogene Systeme verstanden, die undurchsichtig sind und bei denen die organische Harzphase als Teilchen einer mittleren Größe von 50-3000 nm in Wasser verteilt ist. Unter den Begriff « wäßrige Dispersionen » fallen im folgenden also nicht jene Alkydharz- bzw. Polyester-Lösungen, die durch neutralisierte Säuregruppen in wäßriger Phase durchsichtige Lösungen bilden ; derartige Harze besitzen in der Regel Säurezahlen über 40, werden in mit Wasser mischbaren organischen Lösungsmitteln vorgelöst und nach der Neutralisation mit Wasser zu homogenen, durchsichtigen Lösungen verdünnt.

Für den zunehmenden Einsatz wäßriger Alkydharz- bzw. Polyesterdispersionen sprechen hauptsächlich zwei Gründe : Erstens besitzen sie den Vorteil, daß man auf die Verwendung organischer Lösungsmittel verzichten kann, und zweitens neigen sie — anders als die aus organischer Lösung applizierten Überzugsmittel — kaum zum Ablaufen an senkrechten Flächen vgl. (F. Armitage, L. G. Trace, J. Oil and Colour Chemists Assoc. 1957, S. 860).

Wäßrige Dispersionen urethanmodifizierter Polyester und Alkydharze und ihre Verwendung als Bindemittel für lufttrocknende Lacke sowie für Einbrennlacke sind bekannt (DE-OS 28 37 552, 29 28 552). Die daraus hergestellten Überzüge zeichnen sich durch hohe Härte und Elastizität, gute Lösungsmittelbeständigkeit, hohen Glanz und gute Haftung aus. Allerdings genügen bei sehr hoher Pigmentierung, d. h. bei Pigmentgehalten von über 80 Gew.-%, vorzugsweise von über 100 Gew.-%, bezogen auf organischen Festkörpergehalt, aus diesen Lacken hergestellte Überzüge mitunter allzu hohen Anforderungen nicht. Außerden ist die Lagerstabilität dieser Dispersionen meist sehr beschränkt.

Die EP-A-0002488 befaßt sich ebenfalls mit der Herstellung von wasseremulgierbaren lufttrocknenden Bindemitteln. Bei diesen Bindemitteln handelt es sich um solche, deren Hydrophilie insbesondere durch Mitverwendung von hohen Mengen an Polyethylenglykol erreicht wird. Darüber hinaus können die Bindemittel auch noch Carboxylatgruppen enthalten, wie sie durch Neutralisation von Carboxylgruppen entstehen, die ihrerseits durch eine ringöffnende Esterbildungsreaktion unter Verwendung von cyclischen Dicarbonsäureanhydriden eingebaut worden sind. Der Nachteil derartiger wäßriger Bindemittel liegt auf der Hand : Einerseits weisen diese Bindemittel wegen des hohen Gehalts an hydrophilen Polyetherketten irreversibel eingebaute hydrophile Zentren auf, die die Wasserresistenz der unter Verwendung von entsprechenden Beschichtungsmitteln hergestellten Überzüge negativ beeinträchtigen. Andererseits sind die, die Wasserdispergierbarkeit ebenfalls bewirkenden Carboxylatgruppen über Estergruppen eingebaut, die leicht hydrolytisch abgespaltet werden können, so daß der Beitrag der Carboxylatgruppen zur Dispergierbarkeit der Bindemittel in Wasser alsbald verlorengeht. In den nachstehend näher beschriebenen, erfindungsgemäßen Dispersionen liegen keine hydrophilen Polyetherketten vor, die Carboxylatgruppen sind irreversibel über Urethangruppen eingebaut und die Hydrophilie kann durch Neutralisation der Carboxylgruppen mittels flüchtigen Basen sichergestellt werden, die nach Herstellung Überzüge, insbesondere beim Einbrennen abgespalten werden, so daß hydrophobe Überzüge entstehen. Durch Verwendung von speziell ausgewählten Polyestern der nachstehend näher beschriebenen Art können im übrigen hochwertige Bindemittel erhalten werden, die besonders hochwertige lacktechnische Eigenschaften aufweisen.

Gegenstand der Erfindung sind wäßrige, gegebenenfalls übliche Mengen an Hilfsmitteln und Zusatzstoffen enthaltende Dispersionen von gegebenfalls fettsäure- oder ölmodifizierten Polyestern mit einem Gehalt an organischem Festkörper von 30-80 Gew.-% und einem Gehalt an Emulgator von 0-1,5-Gew.-%, bezogen auf Polyester, dadurch gekennzeichnet, daß die Polyester

(i) eine mittlere Funktionalität von 8-10,
(ii) einen mittleren Kondensationsgrad von 20-24,
(iii) einen mittleren Urethangruppengehalt von 8-10 pro Molekül,
(iv) ggf. einen Fettsäuregehalt, berechnet als Triglycerid, von 25 % bis 40 Gew.-% aufweisen,
(v) über organische Polyisocyanate eingebaute Monohydroxy- und/oder 2,2-Di (hydroxymethyl)-carbonsäuren entsprechend einer Säurezahl von 24-28 enthalten, die zu mindestens 65 % neutralisiert sind, und
(vi) ohne Mitverwendung von Polyethylenglykolen eines zwischen 500 und 5000 liegenden Molekulargewichts hergestellt worden sind, und

der Gehalt der Dispersionen an organischen Lösungsmitteln unter 5 Gew.-% liegt.

Gegenstand der Erfindung ist auch ein Verfahren zur Herstellung dieser Dispersionen durch Schmelzdispergierung der Polyester in der wäßrigen Phase.

Gegenstand der Erfindung ist schließlich auch die Verwendung der Dispersionen zur Herstellung von Einbrennlacken.

Bei den, in den erfindungsgemäßen Dispersionen vorliegenden Polyestern kann es sich um fettsäure-und ölfreie Polyester oder um « Alkydharze », d. h. fettsäure- oder ölmodifizierte Polyester handeln.

Unter Alkydharzen und Polyestern versteht man durch Polykondensation nach bekannten Verfahren aus Alkoholen und Carbonsäuren hergestellte Polykondensate der Art, wie sie z. B. in Römpps's Chemielexikon, Bd. 1, S. 202, Frankh'sche Verlagsbuchhandlung, Stuttgart, 1966 definiert oder bei D. H. Solomon, The Chemistry of Organic Filmformers, S. 75-101, John Wiley & Sons Inc., New York, 1967, beschrieben sind.

Für die Synthese der Alkydharze bzw. Polyester bevorzugte Alkohole sind aliphatische, cycloaliphatische und araliphatische Alkohole mit 1-6, vorzugsweise 1-4, OH-Gruppen und 1-24 C-Atomen pro Molekül, z. B. Glykole wie Ethylenglykol, Propylenglykol, Butandiole, Hexandiole ; Etheralkohole wie Di- und Triethylenglykol ; oxethylierte Bisphenole ; perhydrierte Bisphenole ; ferner Trimethylolethan, Trimethylolpropan, Glycerin, Pentaerythrit, Dipentaerythrit, Mannit und Sorbit ; einwertige, kettenabbrechende Alkohole wie Propanol, Butanol, Cyclohexanol und Benzylalkohol.

Für die Synthese der Alkydharze bzw. Polyester bevorzugte Säurekomponenten sind aliphatische gesättigte oder ungesättigte, cycloaliphatische gesättigte oder ungesättigte und aromatische mehrbasische Carbonsäuren, vorzugsweise Di-, Tri- und Tetracarbonsäuren, mit 4-12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellitsäureanhydrid, Pyromellitsäureanhydrid, Fumarsäure, Maleinsäureanhydrid, Adipinsäure und Bernsteinsäureanhydrid, ferner halogenierte Säuren, wie Chlorphthalsäuren und Hexachlorendomethylentetrahydrophthalsäure.

Für die Herstellung der Polyester bzw. Alkydharze bevorzugte Monocarbonsäuren sind aliphatische, cycloaliphatische gesättigte und ungesättigte und aromatische Monocarbonsäuren mit 6-24 C-Atomen pro Molekül wie Benzoesäure, Butylbenzoesäure, Tolylsäure, Hexahydrobenzoesäure, Abietinsäure, Milchsäure sowie Fettsäuren und Fettsäureester wie Leinöl, Sojaöl, Holzöl, Saffloröl, Ricinusöl, Ricinenöl, Baumwollsaatöl, Erdnußöl, Tallölfettsäure, Leinölfettsäure, Sojaöl-, Holzöl-, Saffloröl- und Ricinenölfettsäure und aus natürlichen, ungesättigten Ölen oder Fettsäuren durch Konjugierung oder Isomerisierung gewonnene Produkte ; geeignete gesättigte Fettsäuren sind beispielsweise Cocosfettsäuren und α-Ethylhexansäure.

Die Monohydroxy- und 2.2-Di (hydroxymethyl)-carbonsäuren enthalten vorzugsweise 5 bis 12 C-Atomen, wobei die Carboxylgruppe an einem tertiären C-Atom sitzt. Besonders bevorzugt sind Hydroxypivalinsäure, 2.2-Di (hydroxymethyl)-buttersäure und insbesondere 2,2-Di (hydroxymethyl)-propionsäure.

Die Herstellung der urethanisierten Polyester und Alkydharze kann beispielsweise so erfolgen, daß man ein lineares oder verzweigtes Vorkondensat einer Säurezahl unter 10, vorzugsweise unter 3, auf der Basis Polycarbonsäure, Polyol und gegebenenfalls Fettsäure (ester) mit der Monohydroxy- bzw. 2,2-Di (hydroxymethyl)-carbonsäure, dem Polyisocyanat und gegebenenfalls dem mehr als 2-wertigen Polyol in solchen Mengen, daß das Molverhältnis Monohydroxy- plus 2.2-Di (hydroxymethyl)-carbonsäure/Polyisocyanat 1 : 1 bis 1 : 2 und das molare Verhältnis Isocyanatgruppen/OH-Gruppen sämtlicher Komponenten weniger als 0,9 : 1 betragen, bei Temperaturen, bei denen die Carboxylgruppen der Monohydroxy- und 2,2-Di (hydroxymethyl)-carbonsäuren nicht reagieren, d. h. bei 60 bis 135, vorzugsweise bei 80 bis 120 °C, umsetzt, bis Kondensationsgrad, Urethan- und Carboxylgruppengehalt (wie oben definiert) erreicht sind.

Unter Kondensationsgrad im Sinne der Erfindung ist die Summe der einkondensierten Einheiten von polyfunktionellen Säure-, Alkohol- und Isocyanatkomponenten pro Molekül zu verstehen.

Unter Funktionalität im Sinne der Erfindung versteht man die Summe von Hydroxyl- und Carboxylgruppen pro Molekül. Sie kann durch Bezug des Titrationsergebnisses auf das als Zahlenmittel bestimmte Molekulargewicht errechnet werden.

Bevorzugte Isocyanate für die Einführung der Urethangruppen in die Polyester bzw. Alkydharze I sind Polyisocyanate mit 4 bis 25, vorzugsweise 4 bis 16, C-Atomen und 2 bis 4, vorzugsweise 2, Isocyanatgruppen pro Molekül, also aliphatische, cycloaliphatische, araliphatische und aromatische Diisocyanate, wie sie beispielsweise in « Methoden der Organischen Chemie » (Houben-Weyl), Bd. 14/2, 4. Aufl., Georg Thieme Verlag, Stuttgart 1963, S. 61-70, und von W. Siefken, Liebigs Ann. Chem. 562, 75-136, beschrieben werden, z. B. 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω',-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat (« Isophorondiisocyanat »), 2,5- und 3,5-Bis-(isocyanatomethyl)-8-methyl-1,4-methano-decahydronaphthalin, 1,5-, 2,5-, 1,6- und 2,6-Bis (isocyanatomethyl)-4,7-methano-hexahydroindan, 1,5-, 2,5-, 1,6- und 2,6-Bis(isocyanato)-4,7-methano-hexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate wie 2,4- bzw. 2,6-Toluylen-diisocyanat, N,N'-(4,4'-Dimethyl-3,3'-diisocyanatodiphenyl)-uretdion, m-Xylylen-diisocyanat, aber auch die Triisocyanate wie 2,4,4'-Triisocyanato-diphenylether, 4,4',4''-Triisocyanatotriphenylmethan, Tris (4-isocyanatophenyl)-thiophosphat, sowie beliebige Gemische dieser Isomeren.

Besonders bevorzugt werden in der Regel die technisch leicht zugänglichen aliphatischen und

cycloaliphatischen Polyisocyanate, insbesondere Hexamethylendiisocyanat, 4,4'-Di (isocyanatocyclohexyl)-methan und 3-Isocyanatomethyl 3,5,5-trimethylcyclohexylisocyanat.

Bevorzugte Neutralisationsmittel für die Polyester und Alkydharze sind Alkalihydroxide, Ammoniak, primäre, sekundäre und tertiäre Amine, wie z. B. Ethylamin, Di- und Triethylamin, Mono-, Di- und Triethanolamin, Dimethylethanolamin, Methyldiethanolamin, Dimethylaminomethylpropanol.

Das als Zahlenmittel bestimmte Molekulargewicht der Polyester und Alkydharze beträgt 2000-10.000 (bis zu Molekulargewichten von 5000 dampfdruckosmometrisch bestimmt in Dioxan und Aceton, wobei bei differierenden Werten der niedrigere Wert als korrekt angesehen wird ; bei Molekulargewichten über 5000 membranosmometrisch bestimmt in Aceton).

Die zur Dispergierung der Bindemittel gegebenenfalls benötigten Emulgatoren können ionischer oder nichtionischer Art oder Mischtypen sein, wie sie z. B. in « Methoden der Organischen Chemie » (Houben-Weyl), Bd. 14/1, Teil 1, 4. Aufl., Georg Thieme Verlag, Stuttgart 1961, S. 190-208, beschrieben sind.

Bevorzugte ionische Emulgatoren sind $C_{12-18}$-Alkyl-sulfate und -sulfonate. Bevorzugte nichtionische Emulgatoren sind Verbindungen der Formel

$$R^1—O—R^3{}_mH \; ; \; R^2—CO—O—R^4{}_nH$$

worin $R^1$ und $R^2$ eine aliphatische, cycloaliphatische, araliphatische oder aromatische Gruppe mit 7-25 C-Atomen, $R^3$ und $R^4$ $C_2H_5O$, $C_3H_7O$ oder $C_4H_9O$ und m und n ganze Zahlen von 3 bis 100 bedeuten.

Bevorzugte Mischtyp-Emulgatoren II lassen sich durch Sulfatierung der Hydroxylgruppen der nichtionischen Emulgatoren gewinnen.

Ferner sind auch Oligomere und Polymere als Emulgatoren oder emulsionsstabilisierende Substanzen II verwendbar. Darunter fallen z. B. Schutzkolloide wie Casein, teilweise und völlig verseiftes Polyvinylacetat, Polymerisate und Copolymerisate aus Acrylsäure oder Methacrylsäure, wobei die Carboxylgruppen ganz oder teilweise neutralisiert sein können.

Zu den Hilfsmitteln und Zusatzstoffen III zählen Farbstoffe, Pigmente, Verlaufmittel, Vernetzungskatalysatoren u. dgl.

Bevorzugte Lösungsmittel, die das Dispergieren erleichtern, sind in der Lacktechnologie übliche wassermischbare Lösungsmittel, z. B. einwertige Alkohole wie Ethanol, Isopropanol, Glykolmonoalkylether wie Glykolmonobutylether, Ethylglycolacetat, N-Methylpyrrolidon, Aceton, Dioxan.

Die erfindungsgemäßen wäßrigen Dispersionen werden vorzugsweise nach dem Schmelzdispergierverfahren hergestellt.

Die erfindungsgemäßen Dispersionen können durch übliche Techniken, z. B. durch Tauchen, Spritzen, Gießen, auf die zu lackierenden Materialien aufgetragen werden. Die dazu notwendige Viskosität stellt man in der Regel durch Zugabe von Wasser ein.

Als Vernetzer sind vorzugsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z. B. in der FR-A-943 411 oder bei D.H. Solomon, The Chemistry of Organic Filmformers, 235-240, John Wiley & Sons, Inc., New York, 1967, beschrieben sind. Die Melaminharze können jedoch auch ganz oder teilweise durch andere vernetzende Aminoplasten, wie sie z. B. in « Methoden der Organischen Chemie » (Houben-Weyl), Bd. 14/2, Teil 2, 4. Aufl., Georg Thieme Verlag, Stuttgart 1963, 319 ff. beschrieben sind, ersetzt werden. Die Vernetzer werden in der Regel in solchen Mengen eingesetzt, daß auf 60 bis 90 Gewichtsteile der Komponente I 10 bis 40 Gewichtsteile Vernetzer, berechnet als Festharz, kommen.

Die aufgetragenen Lackfilme können bei Temperaturen von 120 bis 200 °C gehärtet werden.

Die erfindungsgemäßen Dispersionen eignen sich besonders für die Herstellung von Überzügen, die mechanischen Einwirkungen ausgesetzt sind (z. B. untere Karosserieteile von Kraftfahrzeugen, Karosserieteile von Nutzfahrzeugen, wie Lastwagen, und von Maschinen).

Die aus den erfindungsgemäßen Dispersionen hergestellten Überzüge haften ausgezeichnet auf anderen Überzügen, wie Grundierungen aus wäßrigen Überzugsmitteln, insbesondere elektrophoretisch abgeschiedenen Grundierungen.

Die erfindungsgemäßen Dispersionen besitzen eine Lagerstabilität von über 8 Wochen bei 40 °C, d. h. daß während der Lagerung bei diesen Bedingungen weder die Säurezahl ansteigt noch sich ein Bodensatz bildet.

## Beispiel

Als Emulgator wurde ein auf p-Nonylphenol gestartetes Polyethylenoxid mit einem mittleren Gehalt an 20 Ethylenoxideinheiten pro Molekül verwendet.

Als Melaminharz wurde ein wasserlösliches Hexamethoxymelamin eingesetzt.

1120,6 g Trimethylolpropan,
764,3 g Phthalsäureanhydrid und
1194,9 g Sojaölfettsäure

wurden unter Rühren und Stickstoffatmosphäre bis zu einer Säurezahl von 2,23, einer OH-Zahl von 190 und einer Viskosität, gemessen 70 gew.-%ig in Ethylglykolacetat, entsprechend einer Auslaufzeit von 49

sec (nach DIN 53 211) verestert. Nach dem Abkühlen der Schmelze auf 60 °C wurden bei dieser Temperatur 254,6 g Dimethylolpropionsäure, 615,2 g N-Methylpyrrolidon und 154,7 g Triethylamin zugegeben. Man rührte zwecks Homogenisierung 15 Minuten und ließ dann innerhalb von 30 Minuten 936,4 g « Isophoron » diisocyanat zulaufen, wobei die Temperatur auf 85 °C anstieg. Bei dieser Temperatur wurde 1 Stunde weitergerührt, und dann wurde innerhalb 1 Stunde auf 135 °C aufgeheizt, wieder auf 120 °C abgekühlt und bei dieser Temperatur 41,4 g Emulgator zugegeben. Nach 15 Minuten Rühren wurde die Schmelze in Wasser dispergiert, wobei die Mischtemperatur 65 °C betrug. Bei dieser Temperatur wurde noch 45 Minuten weitergerührt und dann auf Raumtemperatur abgekühlt.

Man erhielt eine feinteilige 40 gew.-%ige wäßrige Dispersion mit einer Lagerstabilität von über 8 Wochen/40 °C.

Die erhaltene Dispersion wurde unter Verwendung von Melaminharz (Gewichtsverhältnis Polyester/Melaminharz : 90/10) zu einem Lack angerieben ; Ergebnisse s. nachfolgende Tabelle :

Tabelle

| | |
|---|---|
| Pigment | 90 % $TiO_2$ |
| Schichtdicke | 35 μm |
| Härtung | 20 Min./70 °C |
| Verlauf | 0 |
| Gitterschnitt | 0 |
| Gardner-Glanz (60 °C) | 84 |
| Erichsentiefung | 6,7 mm |
| Pendelhärte | 143 sec. |
| Festgehalt bei Spritzviskosität | 47,3 Gew.-% |
| Colösergehalt | 3,6 Gew.-% |

## Patentansprüche

1. Wäßrige, gegebenenfalls übliche Mengen an Hilfsmitteln und Zusatzstoffen enthaltende Dispersionen von gegebenfalls fettsäure- oder ölmodifizierten Polyestern mit einem Gehalt an organischem Festkörper von 30-80 Gew.-% und einem Gehalt an Emulgator von 0-1,5 Gew.-%, bezogen auf Polyester, dadurch gekennzeichnet, daß die Polyester

(i) eine mittlere Funktionalität von 8-10,

(ii) einen mittleren Kondensationsgrad von 20-24,

(iii) einen mittleren Urethangruppengehalt von 8-10 pro Molekül,

(iv) ggf. einen Fettsäuregehalt, berechnet als Triglycerid, von 25 % bis 40 Gew.-% aufweisen,

(v) über organische Polyisocyanate eingebaute Monohydroxy- und/oder 2,2-Di (hydroxymethyl)-carbonsäuren entsprechend einer Säurezahl von 24-28 enthalten, die zu mindestens 65 % neutralisiert sind, und

(vi) ohne Mitverwendung von Polyethylenglykolen eines zwischen 500 und 5 000 liegenden Molekulargewichts hergestellt worden sind, und

der Gehalt der Dispersionen an organischen Lösungsmitteln unter 5 Gew.-% liegt.

2. Verfahren zur Herstellung der Dispersionen gemäß Anspruch 1 durch Schmelzdispergierung der Polyester in der wäßrigen Phase.

3. Verwendung der Dispersionen gemäß Anspruch 1 zur Herstellung von Einbrennlacken.

## Claims

1. Aqueous dispersions — optionally containing typical quantities of auxiliaries and additives — of optionally fatty-acid- or oil-modified polyesters containing 30 to 80 % by weight organic solids and 0 to 1.5 % by weight emulsifier, based on polyester,

characterized in that the polyesters have

(i) an average functionality of 8 to 10,

(ii) an average degree of condensation of 20 to 24,

(iii) an average urethane group content of 8 to 10 per molecule,

(iv) optionally, a fatty acid content, expressed as triglyceride, of from 25 to 40 % by weight,

(v) contain monohydroxy- and/or 2,2-di (hydroxymethyl)-carboxylic acids incorporated through organic polyisocyanates corresponding to an acid value of 24 to 28, of which at least 65 % are neutralized, and

(VI) have been produced without the use of polyethylene glycols having a molecular weight of from 500 to 5 000 and

in that the organic solvent content of the dispersions is less than 5 % by weight.

2. A process for the production of the dispersions claimed in claim 1 by melt dispersion of the polyesters in the aqueous phase.

3. The use of the dispersions claimed in claim 1 for the production of stoving lacquers.

**Revendications**

1. Dispersions aqueuses de polyesters éventuellement modifiés par des acides gras ou par des huiles, contenant éventuellement des quantités habituelles d'agents auxiliaires et d'additifs, ayant une teneur en solides organiques de 30-80 % en poids et une teneur en émulsifiant de 0-1,5 % en poids, rapportées aux polyesters, caractérisées en ce que les polyesters

(i) présentent une fonctionnalité moyenne de 8-10,

(ii) présentent un degré moyen de condensation de 20-24,

(iii) présentent une teneur moyenne en groupes uréthannes de 8-10 par molécule,

(iv) présentent éventuellement une teneur en acide gras calculée en triglycéride de 25 à 40 % en poids,

(v) contiennent des acides monohydroxy- et/ou 2,2-di(hydroxyméthyl)-carboxyliques incorporés en passant par des polyisocyanates organiques, en quantités correspondant à un indice d'acide de 24-28, qui sont neutralisés à au moins 65 %, et

(vi) ont été fabriqués sans utilisation simultanée de polyéthylèneglycols d'un poids moléculaire compris entre 500 et 5 000,

et en ce que la teneur des dispersions en solvants organiques est de moins de 5 % en poids.

2. Procédé pour la fabrication de dispersions selon la revendication 1, par dispersion à l'état fondu des polyesters dans la phase aqueuse.

3. Utilisation des dispersions selon la revendication 1 pour la fabrication de vernis à cuire.